# EUROPEAN PATENT APPLICATION

(11) **EP 3 893 491 A1**
(43) Date of publication of application: **13.10.2021**
(21) Application number: 20758891.4
(22) Date of filing: 12.02.2020
(51) Int. Cl.: H04N 5/232

(54) **METHOD FOR PHOTOGRAPHING THE MOON AND ELECTRONIC DEVICE**

(30) Priority: 18.02.2019 CN 201910120654; 22.02.2019 CN 201910134047
(71) Applicant: Huawei Technologies Co., Ltd., Shenzhen Guangdong 518129 (CN)
(72) Inventor: CHEN, Bin, Shenzhen, Guangdong 518129 (CN); ZHANG, Yifan, Shenzhen, Guangdong 518129 (CN); GUO, Xin, Shenzhen, Guangdong 518129 (CN); AO, Huanhuan, Shenzhen, Guangdong 518129 (CN); QIAO, Lei, Shenzhen, Guangdong 518129 (CN)
(74) Representative: MERH-IP Matias Erny Reichl Hoffmann Patentanwälte PartG mbB
(86) International application number: PCT/CN2020/074863
(87) International publication number: WO 2020/168956

(57) **Abstract**

This application provides a moon shooting method and an electronic device. In this method, an electronic device automatically identifies the moon in a preview interface, and enters a moon mode after identifying the moon, to implement automatic focus on the moon, and display an image with the clear-cut moon in the preview interface. Then, according to a shooting operation of a user, a plurality of frames of images of the clear-cut moon with different exposure parameters are captured, and the plurality of frames of captured images are differently processed, to obtain a photo including a clear and bright background and the clear-cut, bright, and beautiful moon. According to this method, a photo with the clear-cut, bright, and beautiful moon can be shot in a standard mode or in a shooting process of a non-professional user, to improve shooting experience of the user.

## Description

This application claims priority to Chinese Patent Application No. 201910120654.0, filed with the China National Intellectual Property Administration on February 18, 2019, and entitled "MOON WATCHING ALGORITHM, AND USING AI TECHNOLOGY TO ENABLE COMMON USER TO SHOOT PHOTOS WITH AI-ENHANCED MOON AND BACKGROUND EFFECTS", and claims priority of Chinese Patent Application No. 201910134047.X, filed with the China National Intellectual Property Administration on February 22,2019 and entitled "MOON SHOOTING METHOD AND ELECTRONIC DEVICE", which are incorporated herein by reference in their entireties.

### TECHNICAL FIELD

This application relates to the field of electronic technologies, and in particular, to a moon shooting method and an electronic device.

### BACKGROUND

The moon is a very common shooting subject. Currently, when a mobile phone shoots photos of the moon in a standard mode, most of the photos are overexposed and out of focus. A photo with the clear-cut moon can be shot only when a user that can use a professional mode decreases exposure and ISO (international organization for standardization, ISO) to proper levels.

### SUMMARY

This application provides a moon shooting method and an electronic device, to implement word or sentence repetition in a video play process, improve an English learning effect of a user, and improve user experience.

According to a first aspect, a moon shooting method is provided, applied to an electronic device, where the method includes: displaying a shooting interface of a camera of the electronic device; obtaining an image in the shooting interface, and determining, based on the image, that the shooting interface includes the moon; entering a moon mode and enabling automatic focus on the moon; receiving a shooting operation of a user, and obtaining a plurality of frames of images in response to the shooting operation, where the plurality of frames of images are images including the moon with different exposure parameters; and performing fusion on the plurality of frames of images, to obtain a first photo.

According to the moon shooting method provided in the foregoing technical solution, the electronic device automatically identifies the moon in a preview interface, and enters the moon mode after identifying the moon, to implement automatic focus on the moon, and display an image with the clear-cut moon in the preview interface. Then, according to the shooting operation of the user, a plurality of frames of images of the clear-cut moon with different exposure parameters are captured, and the plurality of frames of captured images are processed differently, to obtain a photo including a clear background image and a photo including the clear and bright moon. Fusion is performed on the photo with a clear background image and the photo with the clear and bright moon, to obtain a photo with the clear moon and a clear background.

When the user shoots the moon, the method may implement an automatic processing technology in a shooting preview interface to identify the moon, implement automatic focus to obtain a clear moon image, and separately perform enhancement on the moon and the background during shooting, to shoot a photo with the clear-cut, bright, and beautiful moon. In this way, the photo with the clear-cut, bright, and beautiful moon is shot in a standard shooting mode or in a shooting process of a non-professional user. This improves shooting experience of the user.

With reference to the first aspect, in some implementations of the first aspect, the entering a moon mode further includes: automatically adjusting an exposure parameter, so that display brightness of the moon in the shooting interface reaches a preset value.

With reference to the first aspect and the foregoing implementations, in some implementations of the first aspect, the plurality of frames of images include a first group of images with a first exposure parameter and a second group of images with a second exposure parameter, and the performing fusion on the plurality of frames of images to obtain a first photo includes: performing fusion on the first group of images with the first exposure parameter, to obtain a second photo including a clear moon image; performing fusion on the second group of images with the second exposure parameter, to obtain a third photo including a clear background image; and performing fusion on the second photo and the third photo, to obtain the first photo.

With reference to the first aspect and the foregoing implementations, in some implementations of the first aspect, the fusion on the plurality of frames of images further includes artificial intelligence AI detail enhancement, where the AI detail enhancement is used to enhance a fine detail resolution of the moon.

With reference to the first aspect and the foregoing implementations, in some implementations of the first aspect, after the entering a moon mode, the method further includes: displaying a first control in the shooting interface, where the first control is used to indicate that the electronic device currently enters the moon mode.

With reference to the first aspect and the foregoing implementations, in some implementations of the first aspect, the method further includes: receiving, in the shooting interface, an operation of closing the first control by the user, and exiting the moon mode in response to the operation.

With reference to the first aspect and the foregoing implementations, in some implementations of the first aspect, the electronic device stores a feature of the moon; and the obtaining an image in the shooting interface, and determining, based on the image, that the shooting interface includes the moon includes: obtaining a feature of a first object in the shooting interface, where the feature of the first object is used to determine a category of the first object; and determining, based on the feature of the first object and the feature of the moon, that the first object is the moon.

With reference to the first aspect and the foregoing implementations, in some implementations of the first aspect, the determining, based on the feature of the first object and the feature of the moon, that the first object is the moon includes: when a degree of matching between the feature of the first object and the feature of the moon is greater than or equal to a first threshold, determining that the first object is the moon.

According to a second aspect, an electronic device is provided, including one or more processors, one or more memories, a plurality of applications, and one or more programs, where the one or more programs are stored in the memory, and when the one or more programs are executed by the processor, the electronic device is enabled to perform the following steps: displaying a shooting interface of a camera of the electronic device; obtaining an image in the shooting interface, and determining, based on the image, that the shooting interface includes the moon; entering a moon mode and enabling automatic focus on the moon; receiving a shooting operation of a user, and obtaining a plurality of frames of images in response to the shooting operation, where the plurality of frames of images are images including the moon with different exposure parameters; and performing fusion on the plurality of frames of images, to obtain a first photo.

With reference to the second aspect, in some implementations of the second aspect, when the one or more programs are executed by the processor, the electronic device is enabled to perform the following step: automatically adjusting an exposure parameter, so that display brightness of the moon in the shooting interface reaches a preset value.

With reference to the second aspect and the foregoing implementations, in some implementations of the second aspect, the plurality of frames of images include a first group of images with a first exposure parameter and a second group of images with a second exposure parameter, and when the one or more programs are executed by the processor, the electronic device is enabled to perform the following steps: performing fusion on the first group of images with the first exposure parameter, to obtain a second photo including a clear moon image; performing fusion on the second group of images with the second exposure parameter, to obtain a third photo including a clear background image; and performing fusion on the second photo and the third photo, to obtain the first photo.

With reference to the second aspect and the foregoing implementations, in some implementations of the second aspect, when the one or more programs are executed by the processor, the electronic device is enabled to perform the following step: performing artificial intelligence AI detail enhancement on the plurality of frames of images, where the AI detail enhancement is used to enhance a fine detail resolution of the moon.

With reference to the second aspect and the foregoing implementations, in some implementations of the second aspect, when the one or more programs are executed by the processor, the electronic device is enabled to perform the following step: displaying a first control in the shooting interface, where the first control is used to indicate that the electronic device currently enters the moon mode.

With reference to the second aspect and the foregoing implementations, in some implementations of the second aspect, when the one or more programs are executed by the processor, the electronic device is enabled to perform the following steps: receiving, in the shooting interface, an operation of closing the first control by the user, and exiting the moon mode in response to the operation.

With reference to the second aspect and the foregoing implementations, in some implementations of the second aspect, when the one or more programs are executed by the processor, the electronic device is enabled to perform the following steps: storing a first feature of the moon; obtaining a feature of a first object in the shooting interface, where the feature of the first object is used to determine a category of the first object; and determining, based on the feature of the first object and the feature of the moon, that the first object is the moon.

With reference to the second aspect and the foregoing implementations, in some implementations of the second aspect, when the one or more programs are executed by the processor, the electronic device is enabled to perform the following step: when a degree of matching between the feature of the first object and the feature of the moon is greater than or equal to a first threshold, determining that the first object is the moon.

According to a third aspect, this application provides an apparatus. The apparatus is included in an electronic device, and the apparatus has a function of implementing behavior of the electronic device in the foregoing aspects and the possible implementations of the foregoing aspects. A function may be implemented by hardware, or may be implemented by hardware by executing corresponding software. The hardware or the software includes one or more modules or units corresponding to the foregoing function, for example, a display module or unit, a detection module or unit, or a processing module or unit.

According to a fourth aspect, this application provides an electronic device, including a touchscreen, where the touchscreen includes a touch-sensitive surface and a display, a camera, one or more processors, a memory, a plurality of applications, and one or more computer programs. The one or more computer programs are stored in the memory, and the one or more computer programs include instructions. When the instructions are executed by the electronic device, the electronic device is enabled to perform the moon shooting method according to any possible implementation of any one of the foregoing aspects.

According to a fifth aspect, this application provides an electronic device, including one or more processors and one or more memories. The one or more memories are coupled to the one or more processors. The one or more memories are configured to store computer program code, and the computer program code includes computer instructions. When the one or more processors execute the computer instructions, the electronic device is enabled to perform the moon shooting method according to any possible implementation of any one of the foregoing aspects.

According to a sixth aspect, this application provides a computer storage medium, including computer instructions. When the computer instructions are run on an electronic device, the electronic device is enabled to perform the moon shooting method according to any possible implementation of any one of the foregoing aspects.

According to a seventh aspect, this application provides a computer program product. When the computer program product is run on an electronic device, the electronic device is enabled to perform the moon shooting method according to any possible implementation of any one of the foregoing aspects.

### BRIEF DESCRIPTION OF DRAWINGS

FIG. 1 is a schematic diagram of a hardware structure of an electronic device according to an embodiment of this application;
FIG. 2 is a schematic diagram of a software structure of an electronic device according to an embodiment of this application;
FIG. 3(a) to FIG. 3(g) are schematic diagrams of examples of moon shooting user interfaces according to an embodiment of this application;
FIG. 4(a) and FIG. 4(b) are a schematic diagram of an example of a moon shooting process according to an embodiment of this application;
FIG. 5 is a schematic diagram of an example of a processing process of a processing flow phase according to an embodiment of this application;
FIG. 6(a) to FIG. 6(c) are diagrams of effects of an image processing process according to an embodiment of this application;
FIG. 7 is a schematic flowchart of a moon shooting method according to an embodiment of this application; and
FIG. 8 is a schematic diagram of components of an example of an electronic device according to an embodiment of this application.

### DESCRIPTION OF EMBODIMENTS

The following describes the technical solutions in the embodiments of this application with reference to accompanying drawings in the embodiments of this application. In descriptions in the embodiments of this application, "/" means "or" unless otherwise specified. For example, A/B may represent A or B. In this specification, "and/or" describes only an association for describing associated objects and represents that three relationships may exist. For example, A and/or B may represent the following three cases: Only A exists, both A and B exist, and only B exists. In addition, in the descriptions in the embodiments of this application, "a plurality of' means two or more than two.

The following terms "first" and "second" are merely intended for description, and shall not be understood as an indication or implication of relative importance or implicit indication of a quantity of indicated technical features. Therefore, a feature limited by "first" or "second" may explicitly or implicitly include one or more features. In the descriptions of the embodiments, unless otherwise stated, "a plurality of' means two or more than two.

As described in the background, currently, only a user who uses a professional mode can adjust a shooting parameter, to shoot a photo with the clear-cut moon. In a shooting process in a standard mode, or when a non-professional user does not know how to adjust a shooting parameter, it is difficult to shoot a photo with the bright and beautiful moon. This is mainly because a night environment is dark and the moon is a long-distance shooting object. Therefore, a moon shooting method is required to shoot a photo with the clear and bright moon.

The embodiments of this application provide a moon shooting method, applied to an electronic device. When a user expects to shoot the moon, an effect achieved by manually reducing exposure and focusing on the moon can be achieved in shooting preview, and the moon and a background are enhanced during shooting, to shoot an image with the clear-cut, bright, and beautiful moon.

The moon shooting method provided in the embodiments of this application may be applied to any electronic device that can display an interface, such as a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA). A specific type of the electronic device is not limited in the embodiments of this application.

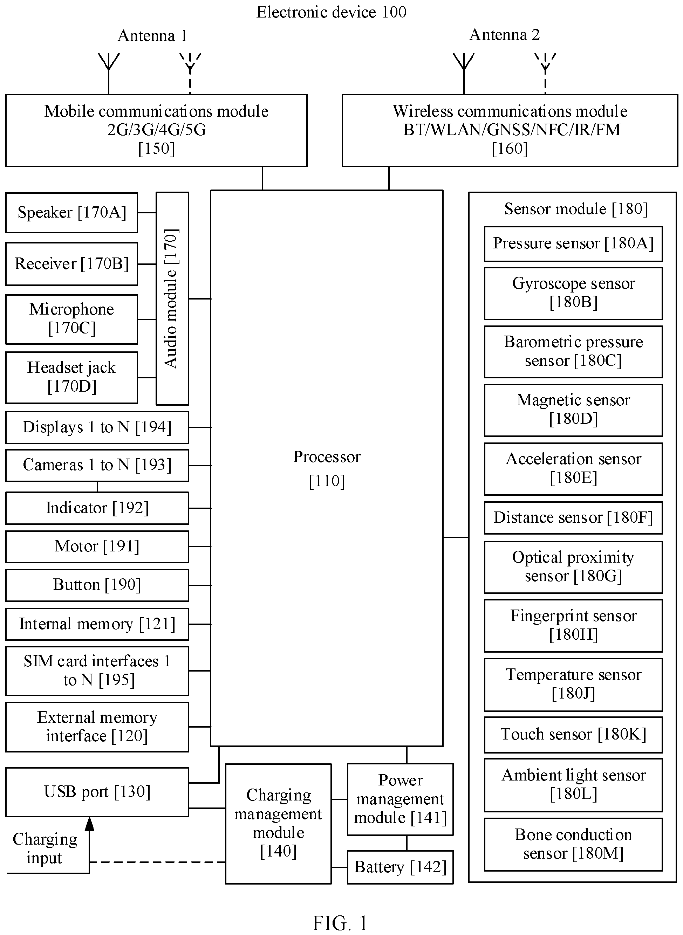

For example, FIG. 1 is a schematic structural diagram of an electronic device 100. The electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communications module 150, a wireless communications module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in the embodiments of this application does not constitute a specific limitation on the electronic device 100. In some other embodiments of this application, the electronic device 100 may include more or fewer components than those shown in the figure, or some components may be combined, or some components may be split, or different component arrangements may be used. The components in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural network processing unit (neural-network processing unit, NPU), and/or the like. Different processing units may be independent components, or may be integrated into one or more processors.

The controller may be a nerve center and a command center of the electronic device 100. The controller may generate an operation control signal based on instruction operation code and a time sequence signal, to control over instruction reading and instruction executing.

A memory may be further disposed in the processor 110, and is configured to store an instruction and data. In some embodiments, the memory in the processor 110 is a cache memory. The memory may store instructions or data that has just been used or is cyclically used by the processor 110. If the processor 110 needs to use the instructions or the data again, the processor 110 may directly invoke the instructions or the data from the memory, to avoid repeated access. This reduces a waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The I2C interface is a two-way synchronization serial bus, and includes a serial data line (serial data line, SDA) and a serial clock line (derail clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through an I2S bus, to implement communication between the processor 110 and the audio module 170. In some embodiments, the audio module 170 may transmit an audio signal to the wireless communications module 160 through the I2S interface, to implement a function of answering a call by using a Bluetooth headset.

The PCM interface may also be configured to perform audio communication, and sample, quantize, and code an analog signal. In some embodiments, the audio module 170 may be coupled to the wireless communications module 160 through the PCM bus interface. In some embodiments, the audio module 170 may alternatively transmit an audio signal to the wireless communications module 160 through the PCM interface, to implement the function of answering a call by using the Bluetooth headset. Both the I2S interface and the PCM interface may be configured to perform audio communication.

The UART interface is a universal serial data bus, and is configured to perform asynchronous communication. The bus may be a two-way communications bus, and converts to-be-transmitted data between serial communication and parallel communication. In some embodiments, the UART interface is usually configured to connect the processor 110 to the wireless communications module 160. For example, the processor 110 communicates with a Bluetooth module in the wireless communications module 160 through the UART interface, to implement a Bluetooth function. In some embodiments, the audio module 170 may transmit an audio signal to the wireless communications module 160 through the UART interface, to implement a function of playing music by using the Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a shooting function of the electronic device 100. The processor 110 communicates with the display 194 through the DSI interface, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communications module 160, the audio module 170, the sensor module 180, and the like. The GPIO interface may alternatively be configured as the I2C interface, the I2S interface, the UART interface, the MIPI interface, or the like.

The USB port 130 is a port that conforms to a USB standard specification, and may be specifically a mini USB port, a micro USB port, a USB Type C port, or the like. The USB port 130 may be configured to connect to the charger to charge the electronic device 100, or may be configured to transmit data between the electronic device 100 and a peripheral device, or may be configured to connect to a headset to play audio by using the headset, or may be configured to connect to another electronic device such as an AR device.

It may be understood that an interface connection relationship between the modules shown in the embodiments of the present invention is merely used as an example for description, and does not constitute a limitation on the structure of the electronic device 100. In some other embodiments of this application, the electronic device 100 may alternatively use an interface connection manner different from that in the foregoing embodiment, or a combination of a plurality of interface connection manners.

The charging management module 140 is configured to receive a charging input from the charger. The charger may be a wireless charger or a wired charger. In some embodiments in which wired charging is used, the charging management module 140 may receive a charging input from the wired charger through the USB port 130. In some embodiments in which wireless charging is used, the charging management module 140 may receive a wireless charging input through a wireless charging coil of the electronic device 100. The charging management module 140 may further supply power to the electronic device by using the power management module 141 when the battery 142 is charged.

The power management module 141 is configured to connect the battery 142 and the charging management module 140 to the processor 110. The power management module 141 receives an input from the battery 142 and/or the charging management module 140, and supplies power to the processor 110, the internal memory 121, an external memory, the display 194, the camera 193, the wireless communications module 160, and the like. The power management module 141 may be further configured to monitor parameters such as battery power, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communications module 150, the wireless communications module 160, the modem processor, the baseband processor, and the like.

The antenna 1 and the antenna 2 each are configured to transmit and receive an electromagnetic wave signal. Each antenna in the electronic device 100 may be configured to cover one or more communications bands. Different antennas may be further multiplexed to improve antenna utilization. For example, the antenna 1 may be multiplexed as a diversity antenna in a wireless local area network. In some other embodiments, an antenna may be used in combination with a tuning switch.

The mobile communications module 150 may provide a wireless communication solution, for example, including 2G/3G/4G/5G wireless communication, that is applied to the electronic device 100. The mobile communications module 150 may include at least one filter, a switch, a power amplifier, a low noise amplifier (low noise amplifier, LNA), and the like. The mobile communications module 150 may receive an electromagnetic wave through the antenna 1, perform processing such as filtering or amplification on the received electromagnetic wave, and transmit a processed electromagnetic wave to the modem processor for demodulation. The mobile communications module 150 may further amplify a signal modulated by the modem processor, and convert the signal into an electromagnetic wave for radiation through the antenna 1. In some embodiments, at least some function modules of the mobile communications module 150 may be disposed in the processor 110. In some embodiments, at least some function modules of the mobile communications module 150 and at least some modules of the processor 110 may be disposed in a same device.

The modem processor may include a modulator and a demodulator. The modulator is configured to modulate a to-be-sent low-frequency baseband signal into a medium or high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor, and then transmitted to the application processor. The application processor outputs a sound signal through an audio device (which is not limited to the speaker 170A, the receiver 170B, or the like), or displays an image or a video through the display 194. In some embodiments, the modem processor may be an independent component. In some other embodiments, the modem processor may be independent of the processor 110, and is disposed in a same device as the mobile communications module 150 or another function module.

The wireless communications module 160 may provide a wireless communication solution that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like and that is applied to the electronic device 100. The wireless communications module 160 may be one or more devices that integrate at least one communications processing module. The wireless communications module 160 receives an electromagnetic wave through the antenna 2, performs frequency modulation and filtering processing on an electromagnetic wave signal, and sends a processed signal to the processor 110. The wireless communications module 160 may further receive a to-be-sent signal from the processor 110, perform frequency modulation and amplification on the signal, and convert the signal into an electromagnetic wave through the antenna 2 for radiation.

In some embodiments, the antenna 1 of the electronic device 100 is coupled to the mobile communications module 150, and the antenna 2 is coupled to the wireless communications module 160, so that the electronic device 100 may communicate with a network and another device by using a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a beidou navigation satellite system (beidou navigation satellite system, BDS), a quasi-zenith satellite system (quasi-zenith satellite system, QZSS), and/or satellite based augmentation systems (satellite based augmentation systems, SBAS).

The electronic device 100 implements a display function by using the GPU, the display 194, the application processor, and the like. The GPU is a microprocessor for image processing, and connects the display 194 to the application processor. The GPU is configured to perform mathematical and geometric calculation, and perform graphics rendering. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini LED, a micro LED, a micro OLED, quantum dot light emitting diodes (quantum dot light emitting diodes, QLED), or the like. In some embodiments, the electronic device 100 may include one or N displays 194, where N is a positive integer greater than 1.

The electronic device 100 may implement a shooting function by using the ISP, the camera 193, the video codec, the GPU, the display 194, the application processor, and the like.

The ISP is configured to process data fed back by the camera 193. For example, during shooting, a shutter is pressed, light is transmitted to a photosensitive element of the camera through a lens. The photosensitive element of the camera converts an optical signal into an electrical signal, and transmits the electrical signal to the ISP for processing. The ISP converts the electrical signal into an image that is perceptible to the eye. The ISP may further perform algorithm optimization on noise, brightness, and complexion of the image. The ISP may further optimize parameters such as exposure and color temperature of a shooting scene. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into a standard image signal in an RGB format, a YUV format, or the like. In some embodiments, the electronic device 100 may include one or N cameras 193, where N is a positive integer greater than 1.

For example, in the moon shooting method provided in this application, the camera may capture a moon image and a background image, and display the captured images in a preview interface. The photosensitive element converts a collected optical signal into an electrical signal, and then transmits the electrical signal to the ISP. The ISP converts the electrical signal into a digital image signal, and outputs the digital image signal to the DSP for related image processing.

The digital signal processor is configured to process a digital signal, and may process another digital signal in addition to the digital image signal. For example, when the electronic device 100 selects a frequency, the digital signal processor is configured to perform Fourier transformation and the like on frequency energy.

The video codec is configured to compress or decompress a digital video. The electronic device 100 may support one or more video codecs. Therefore, the electronic device 100 may play or record videos in a plurality of coding formats, for example, MPEG (moving picture experts group, MPEG)-1, MPEG-2, MPEG-3, and MPEG-4.

The NPU is a neural-network (neural-network, NN) computing processor. The NPU quickly processes input information by referring to a biological neural network structure, for example, by referring to a mode of transfer between human brain neurons, and may further continuously perform self-learning. The electronic device 100 may implement intelligent cognition such as image recognition, facial recognition, speech recognition, and text understanding through the NPU.

The external memory interface 120 may be configured to connect to an external memory card such as a micro SD card, to extend a storage capability of the electronic device 100. The external memory card communicates with the processor 110 through the external memory interface 120, to implement a data storage function, for example, to store files such as music and a video in the external memory card.

The internal memory 121 may be configured to store computer-executable program code. The executable program code includes instructions. The processor 110 runs the instructions stored in the internal memory 121 to perform various function applications of the electronic device 100 and process data. The internal memory 121 may include a program storage area and a data storage area. The program storage area may store an operating system, an application required by at least one function (for example, a sound playing function or an image playing function), and the like. The data storage area may store data (for example, audio data, a phone book, and the like) created in a process of using the electronic device 100, and the like. In addition, the internal memory 121 may include a highspeed random access memory, or may include a nonvolatile memory, for example, at least one magnetic disk storage device, a flash memory device, or a universal flash storage (universal flash storage, UFS).

The electronic device 100 may implement audio functions, for example, music playing and recording, by using the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to perform audio signal encoding and decoding. In some embodiments, the audio module 170 may be disposed in the processor 110, or some function modules of the audio module 170 are disposed in the processor 110.

The speaker 170A, also referred to as a "horn", is configured to convert an audio electrical signal into a sound signal. The electronic device 100 may listen to music or answer a hands-free call by using the speaker 170A.

The receiver 170B, also referred to as an "earpiece", is configured to convert an audio electrical signal into a sound signal. When the electronic device 100 answers a call or receives voice information, the receiver 170B may be placed near a human ear to listen to a voice.

The microphone 170C, also referred to as a "mike" or a "microphone", is configured to convert a sound signal into an electrical signal. When making a call or sending a voice message, a user may make a sound near the microphone 170C, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, reduce a noise, identify a sound source, implement a directional recording function, and the like.

The headset jack 170D is configured to connect to a wired headset. The headset jack 170D may be the USB interface 130 or a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are many types of pressure sensors 180A such as a resistive pressure sensor, an inductive pressure sensor, and a capacitive pressure sensor. The capacitive pressure sensor may include at least two parallel plates made of conductive materials. Capacitance between electrodes changes when force is applied to the pressure sensor 180A. The electronic device 100 determines pressure intensity based on a change of the capacitance. When a touch operation is performed on the display 194, the electronic device 100 detects a strength of the touch operation based on the pressure sensor 180A. The electronic device 100 may also calculate a touch location based on a detection signal of the pressure sensor 180A. In some embodiments, touch operations that are performed at a same touch location but have different touch operation intensity may correspond to different operation instructions. For example, when a touch operation whose touch operation intensity is less than a first pressure threshold is performed on an SMS message application icon, an instruction for viewing an SMS message is executed. When a touch operation whose touch operation intensity is greater than or equal to the first pressure threshold is performed on an SMS message application icon, an instruction for creating an SMS message is executed.

The gyroscope sensor 180B may be configured to determine a motion posture of the electronic device 100. In some embodiments, an angular velocity of the electronic device 100 around three axes (namely, axes x, y, and z) may be determined by using the gyroscope sensor 180B. The gyroscope sensor 180B may be configured to perform image stabilization during shooting. For example, when the shutter is pressed, the gyroscope sensor 180B detects an angle at which the electronic device 100 jitters, and calculates, based on the angle, a distance for which a lens module needs to compensate, and allows the lens to eliminate the jitter of the electronic device 100 through a reverse motion, to implement image stabilization. The gyroscope sensor 180B may be further used in a navigation scenario and a somatic game scenario.

The barometric pressure sensor 180C is configured to measure barometric pressure. In some embodiments, the electronic device 100 calculates an altitude based on a barometric pressure value measured by the barometric pressure sensor 180C, to assist in positioning and navigation.

The magnetic sensor 180D includes a Hall sensor. The electronic device 100 may detect opening and closing of a flip cover by using the magnetic sensor 180D. In some embodiments, when the electronic device 100 is a clamshell phone, the electronic device 100 may detect opening and closing of a flip cover by using the magnetic sensor 180D, to set a feature such as automatic unlocking through flipping based on a detected opening or closing state of the flip cover.

The acceleration sensor 180E may detect magnitude of accelerations in various directions (usually on three axes) of the electronic device 100, and may detect magnitude and a direction of the gravity when the electronic device 100 is still. The acceleration sensor 180E may be further configured to identify a posture of the electronic device, and is applied to applications such as a pedometer and switching between a landscape mode and a portrait mode.

The distance sensor 180F is configured to measure a distance. The electronic device 100 may measure the distance in an infrared or a laser manner. In some embodiments, in a shooting scenario, the electronic device 100 may measure a distance by using the distance sensor 180F, to implement quick focusing.

For example, in the moon shooting method provided in this application, in a shooting preview phase, in an automatic focus process, ranging may be performed based on the distance sensor 180F, to implement fast automatic focus.

The optical proximity sensor 180G may include, for example, a light-emitting diode (LED) and an optical detector such as a photodiode. The light-emitting diode may be an infrared light-emitting diode. The electronic device 100 emits infrared light by using the light emitting diode. The electronic device 100 detects infrared reflected light from a nearby object by using the photodiode. When detecting sufficient reflected light, the electronic device 100 may determine that there is an object near the electronic device 100. When detecting insufficient reflected light, the electronic device 100 may determine that there is no object near the electronic device 100. The electronic device 100 may detect, by using the optical proximity sensor 180G, that the user holds the electronic device 100 close to an ear for a call. In this case, the electronic device 100 automatically turns off the screen for power saving. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust a white balance during shooting. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based shooting, fingerprint-based call answering, and the like.

The temperature sensor 180J is configured to detect a temperature. In some embodiments, the electronic device 100 executes a temperature processing policy based on the temperature detected by the temperature sensor 180J. For example, when the temperature reported by the temperature sensor 180J exceeds a threshold, the electronic device 100 degrades performance of a processor near the temperature sensor 180J, to reduce power consumption for thermal protection. In some other embodiments, when the temperature is lower than another threshold, the electronic device 100 heats up the battery 142, to avoid abnormal shutdown of the electronic device 100 due to a low temperature. In some other embodiments, when the temperature is lower than still another threshold, the electronic device 100 boosts an output voltage of the battery 142 to avoid abnormal shutdown due to a low temperature.

The touch sensor 180K is also referred to as a "touch panel". The touch sensor 180K may be disposed on the display 194, and the touch sensor 180K and the display 194 form a touchscreen, which is also referred to as a "touchscreen". The touch sensor 180K is configured to detect a touch operation acting on or near the touch sensor 180K. The touch sensor may transfer the detected touch operation to the application processor, to determine a type of a touch event. The display 194 provides a visual output related to the touch operation. In some other embodiments, the touch sensor 180K may alternatively be disposed on a surface of the electronic device 100 in a position different from that of the display 194.

The bone conduction sensor 180M may obtain a vibration signal. In some embodiments, the bone conduction sensor 180M may obtain a vibration signal of a vibration bone of a human vocal part. The bone conduction sensor 180M may also be in contact with a human pulse to receive a blood pressure beating signal. In some embodiments, the bone conduction sensor 180M may alternatively be disposed in a headset, to obtain a bone conduction headset. The audio module 170 may obtain a voice signal through parsing based on the vibration signal that is of the vibration bone of the vocal part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or or may be a touch button. The electronic device 100 may receive a button input, and generate a button signal input related to a user setting and function control of the electronic device 100.

The motor 191 may generate a vibration prompt. The motor 191 may be configured to produce an incoming call vibration prompt and a touch vibration feedback. For example, touch operations performed on different applications (for example, shooting and audio playing) may correspond to different vibration feedback effects. The motor 191 may also correspond to different vibration feedback effects for touch operations performed on different areas of the display 194. Different application scenarios (for example, a time reminder scenario, an information receiving scenario, an alarm clock scenario, and a game scenario) may also correspond to different vibration feedback effects. A touch vibration feedback effect may be further customized.

The indicator 192 may be an indicator light, which may be used to indicate a charging status and a power change, or may be used to indicate a message, a missed call, a notification, and the like.

The SIM card interface 195 is configured to connect to a SIM card. The SIM card may be inserted in the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be simultaneously inserted in a same SIM card interface 195. The plurality of cards may be of a same type or of different types. The SIM card interface 195 may also be compatible with different types of SIM cards. The SIM card interface 195 may also be compatible with an external storage card. The electronic device 100 interacts with a network through the SIM card, to implement functions such as calling and data communication. In some embodiments, the electronic device 100 uses an eSIM, namely, an embedded SIM card. The eSIM card may be embedded in the electronic device 100, and cannot be separated from the electronic device 100.

A software system of the electronic device 100 may use a layered architecture, an event-driven architecture, a microkernel architecture, a micro service architecture, or a cloud architecture. In an embodiment of this application, an Android system with a layered architecture is used as an example to describe a software structure of the electronic device 100.

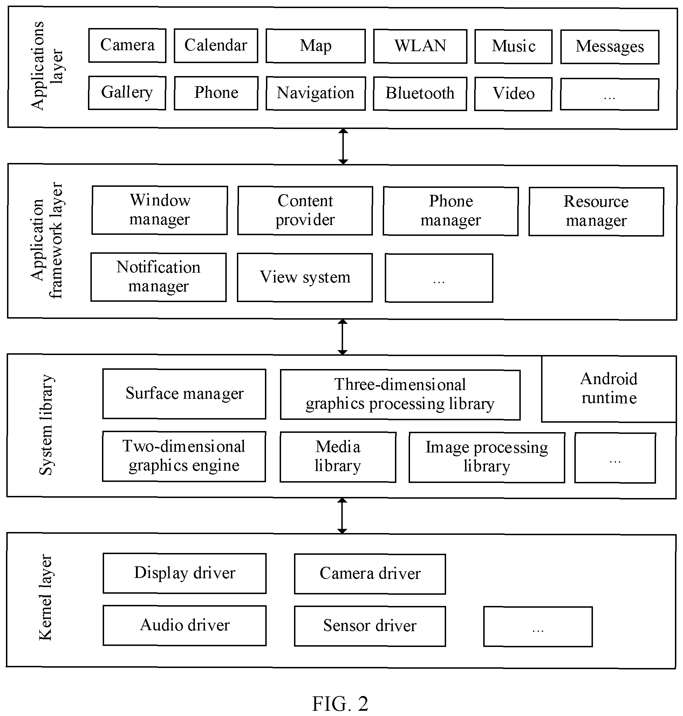

FIG. 2 is a block diagram of the software structure of the electronic device 100 according to this embodiment of this application. In the layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom. The application layer may include a series of application packages.

As shown in FIG. 2, the application packages may include applications such as "camera", "gallery", "calendar", "calls", "maps", "navigation", "WLAN", "Bluetooth", "music", "videos", and "messaging".

The application framework layer provides an application programming interface (application programming interface, API) and a programming framework for an application at the application layer. The application framework layer includes some predefined functions.

For example, in this application, a moon identification function or algorithm, an image processing algorithm, and the like may all be included in the application framework layer.

As shown in FIG. 2, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to store and obtain data, and enable the data to be accessed by an application. The data may include a video, an image, audio, calls that are made and received, a browsing history and a bookmark, a phone book, and the like.

For example, in this application, the content controller may obtain, in real time, an image collected in a preview interface, and display a processed image in the preview interface.

The view system includes visual controls such as a control for displaying text and a control for displaying an image. The view system may be configured to construct an application. A display interface may include one or more views. For example, a display interface including a Messages notification icon may include a text display view and an image display view.

For example, in this application, content such as a "moon mode" displayed in the shooing preview interface may be displayed by the view system after the view system receives an instruction of the processor, to indicate a current shooting mode.

The phone manager is configured to provide a communication function of the electronic device 100, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application running on a background or a notification that appears on the interface in a form of a dialog window. For example, text information is prompted in the status bar, a prompt tone is produced, the electronic device vibrates, or an indicator light blinks.

The Android runtime includes a kernel library and a virtual machine. The Android runtime is responsible for scheduling and management of the Android system.

The kernel library includes two parts: a function that needs to be invoked in java language and a kernel library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of function modules, for example, a surface manager (surface manager), a media library (media libraries), a three-dimensional graphics processing library (for example, OpenGL ES), a 2D graphics engine (for example, SGL), and the like.

The surface manager is configured to manage a display subsystem and provide fusion of 2D and 3D image layers for a plurality of applications.

The media library supports playback and recording of a plurality of commonly used audio and video formats, static image files, and the like. The media library may support a plurality of audio and video coding formats such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

For ease of understanding, in the following embodiments of this application, an electronic device having the structures shown in FIG. 1 and FIG. 2 is used as an example to describe in detail, with reference to the accompanying drawings and application scenarios, the moon shooting method provided in the embodiments of this application.

To shoot a photo with a clear-cut and beautiful moon in a standard shooting mode or in a shooting process of a non-professional user, this application provides an automatic processing technology in a preview phase to identify the moon, implements automatic focus to obtain a clear moon image, and separately performs enhancement on the moon and a background during shooting, to shoot a photo with the clear-cut, bright, and beautiful moon.

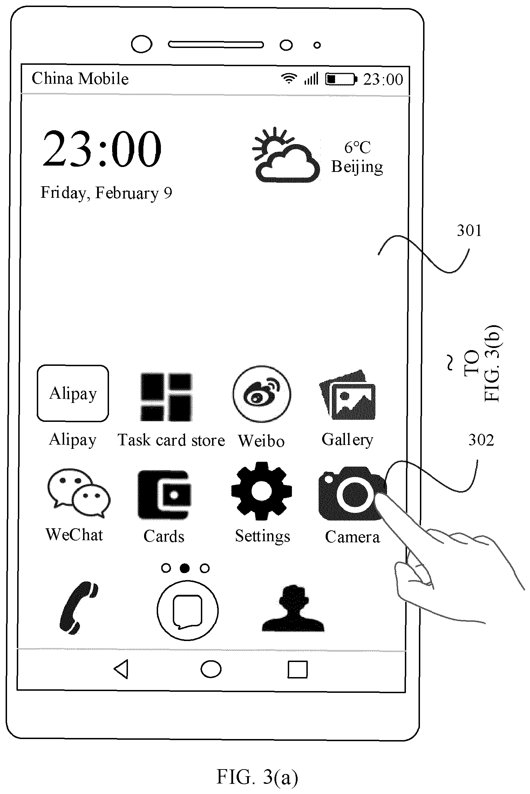

FIG. 3(a) to FIG. 3(g) are schematic diagrams of examples of moon shooting graphical user interfaces (graphical user interface, GUI) according to an embodiment of this application. In this application, a mobile phone is used as an electronic device to describe in detail a moon shooting method provided in this application.

FIG. 3(a) shows currently output interface content 301 that is displayed by a screen display system of the mobile phone in an unlocking state of the mobile phone. The interface content 301 is a home screen of the mobile phone. The interface content 301 displays a plurality of third-party applications (application, App), such as Alipay, Task Card Store, Album, Weibo, WeChat, Card Packet, Settings, and Camera. It should be understood that the interface content 301 may further include more applications. This is not limited in this application.

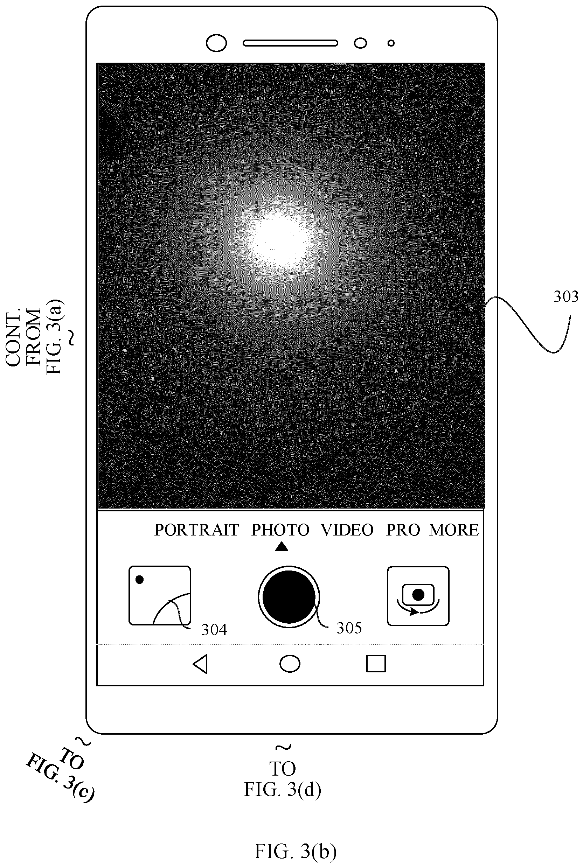

After detecting an operation that a user taps an icon 302 of the camera application on the home screen 301, the mobile phone may start the camera application, and display an interface shown in FIG. 3(b). The interface may be referred to as a shooting interface 303 of the camera. The shooting interface 303 may include a viewfinder, an album icon 304, a shooting control 305, a camera switching control, and the like.

The viewfinder is used to obtain a shooting preview image, and display a preview image in real time, for example, a preview image with a black night sky and the moon in FIG. 3(b). The album icon 304 is used to quickly enter the album. After detecting that the user taps the album icon 307, the mobile phone may display a shot photo, a shot video, or the like on the touchscreen. The shooting control 305 is used to shoot a photo or record a video. After the mobile phone detects that the user taps the shooting control 305, the mobile phone performs a shooting operation and saves a shot photo. Alternatively, when the mobile phone is in a video mode, after the user taps the shooting control 305, the mobile phone records a video and saves a recorded video. The camera switching control is used to control switching between a front camera and a rear camera.

In addition, the shooting interface 303 further includes a function control used to set a shooting mode, for example, a portrait mode, a photo mode, a video mode, a pro mode, or more modes in FIG. 3(b). It should be understood that, after the user taps the icon 302, in response to the tap operation, the mobile phone is in the photo mode by default after starting the camera application. This is not limited in this application.

As shown in FIG. 3(b), in the standard photo mode, the preview image of the moon in the black night sky is blurry and out of focus. To shoot a photo with the clear-cut and bright moon, the user can enter the pro mode to decrease exposure and adjust ISO parameters to proper ranges. However, a user who does not know how to sets shooting parameters in the pro mode cannot shoot a photo with the beautiful moon. Therefore, this application provides a moon shooting method, so that a photo with the clear-cut, bright, and beautiful moon can also be shot in a standard shooting mode or in a shooting process of a non-professional user.

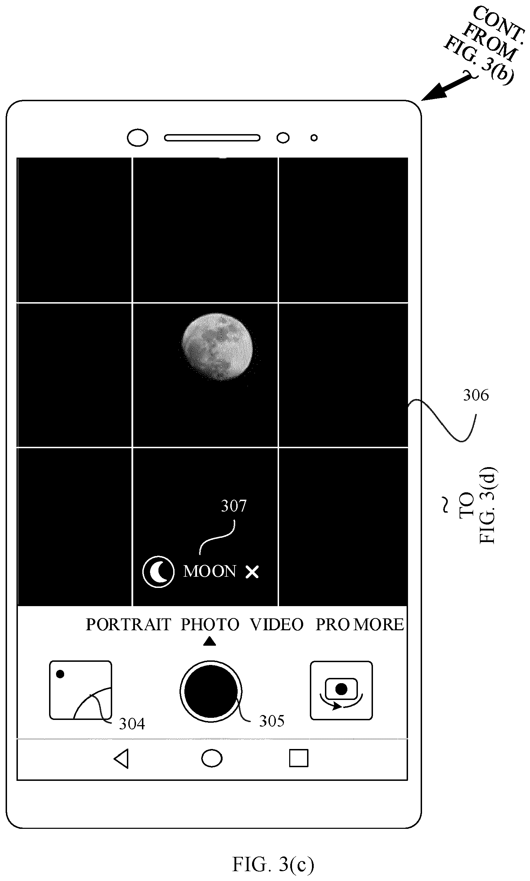

FIG. 3(c) is a schematic diagram of an example of a moon shooting interface according to an embodiment of this application. According to the moon shooting method in this application, the moon can be automatically identified in a shooting preview phase. In a preview interface 306, when the mobile phone identifies the moon, the mobile phone enters a moon mode.

Optionally, when the mobile phone identifies the moon and duration for which a moon image appears in the preview interface 306 is greater than a specific value, the mobile phone enters the moon mode. Herein, whether to enter the moon mode is determined depending on whether the mobile phone identifies the moon and duration for which the moon appears in the preview interface 306. This can reduce a misjudgment rate and impact caused by an operation such as moving of the mobile phone by the user. For example, when the mobile phone identifies the moon in the preview interface 306, but the moon appears for only 1 second, and there is no moon in the preview interface 306 in the next second, the mobile phone may not enter the moon mode. This is not limited in this application.

It should be understood that the moon mode in this application is a mode in which the mobile phone can shoot a photo with the clear-cut, bright, and beautiful moon after automatically adjusting a shooting parameter. The moon mode may correspond to different shooting parameters in different shooting scenes. For example, at night in a glittering city and at night in a dark countryside, the moon mode may correspond to different shooting parameters. This is not limited in this application.

It should be further understood that the foregoing describes a method for triggering the mobile phone to enter the moon mode, and the method is not limited to entering the moon mode from the photo mode or the video mode. For example, in the photo mode, the mobile phone may enter the moon mode after determining, and the user can obtain an image with the clear and bright moon. Alternatively, in the video mode, the mobile phone may enter the moon mode after determining, and the user may obtain and record a video including the clear and bright moon. In this embodiment of this application, entering the moon mode from the photo mode is used as an example for description, and this is not limited in this application.

After the mobile phone enters the moon mode, as shown in FIG. 3(c), a preview interface of the mobile phone may be presented as the interface 306. The preview interface 306 may include a prompt box 307. The prompt box 307 may be used to prompt the user that a current shooting mode is the moon mode. The prompt box 307 may include a moon icon, text content of the moon mode, and a close control.

When the user taps the close control, the mobile phone may exit the moon mode in response to the tap operation of the user. For example, because of another operation of the user, the moon may always appear in the preview interface of the mobile phone within a specific time, and the mobile phone identifies the moon and enters the moon mode. In this case, the user may not want to enter the moon mode to shoot a moon image. Alternatively, when the user wants to exit the moon mode and enter the standard mode after shooting a moon image, the user may tap the close control in the prompt box 307, so that the shooting preview interface may be switched from the display interface in FIG. 3(c) to the display interface in the FIG. 3(b). In addition, there may be another method for closing the moon mode. This is not limited in this application.

After the mobile phone enters the moon mode, a moon photo presented in the shooting preview interface 306 in FIG. 3(c) is clearer, brighter, and more clear-cut than a moon photo presented in FIG. 3(b) in the standard mode. The moon is blurry in the shooting preview interface shown in FIG. 3(b) after the mobile phone exits the moon mode.

In a possible implementation, after the mobile phone enters the moon mode, the preview interface 306 may further include auxiliary lines. The auxiliary lines may be crossed horizontal and vertical lines shown in FIG. 3(c), and the auxiliary lines may help the user locate the moon in the shooting process. Optionally, in the shooting process, the user may place the moon in any grid region formed by auxiliary lines. When the moon is in a middle grid of a nine-grid formed by the auxiliary lines, it is easier to shoot a moon image of a proper size, thereby improving shooting experience of the user.

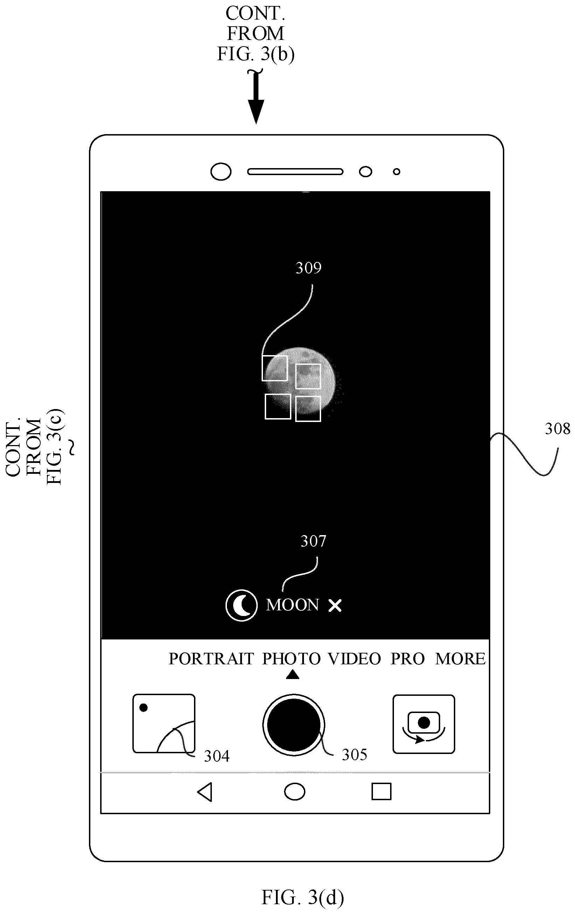

In another possible implementation, after the mobile phone enters the moon mode for shooting, a focus frame may be further displayed on the moon in the shooting preview interface. As shown in FIG. FIG. 3(d), the preview interface 308 may further include a focus frame 309. Optionally, the focus frame 309 may be used to identify a main body of the moon and a general outline of the moon, to quickly perform focusing.

It should be understood that, when the mobile phone enters the moon mode, an automatic focus process is started. A clear moon image may be obtained in the automatic focus process. Compared with the shooting preview image 303 in which focusing is not performed, the moon displayed in the preview interface 306 in the moon mode in FIG. 3(c) is just clearer, and the moon image in the preview interface is not enlarged.

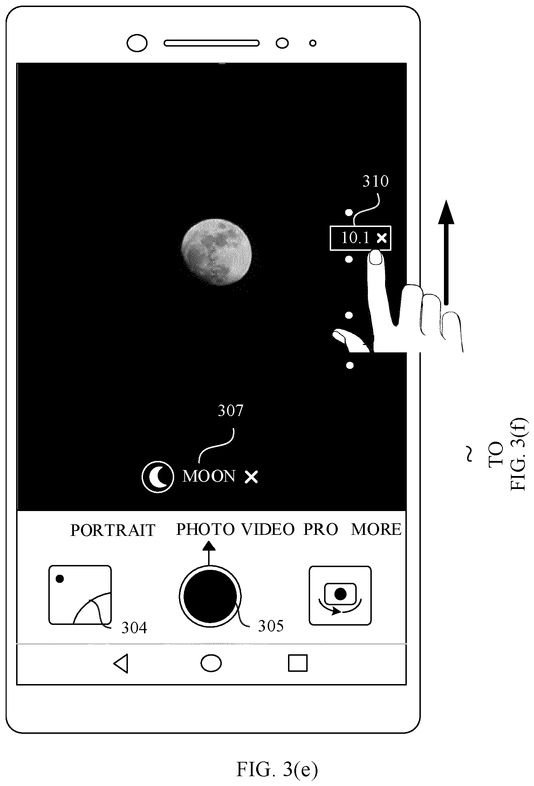

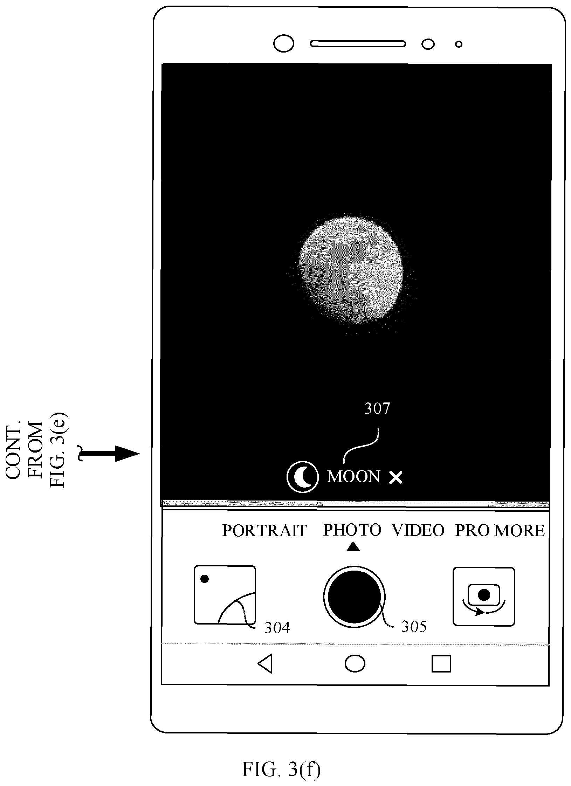

In another possible implementation, after the mobile phone enters the moon mode, the shooting preview interface may further include a zoom level control. As shown in FIG. 3(e), the preview interface may further include a zoom level control 310. Optionally, the zoom level control 310 may be displayed as a control bar formed by dots shown in FIG. 3(d), or a control bar in a straight line form. In an example of the control bar formed by dots, the user may drag a display box on the control bar to change a zoom-in level. For example, "10.1×" in FIG. 3(d) indicates that a current zoom-in level is 10.1, and the user may drag the display box shown in FIG. 3(e) to increase the zoom-in level shown in the display box, so as to change a value of the zoom-in level, and shoot a photo with the moon of a size expected by the user. After the user increases the zoom-in level, a moon image shown in FIG. 3(f) is larger than a moon image shown in FIG. 3(e).

After the mobile phone enters the moon mode for shooting, the user may tap the shooting control 305 to perform shooting. In response to the operation that the user taps the shooting control 305, the mobile phone performs a shooting operation, and saves the shot moon photo in the album icon 304.

It should be understood that the moon photo finally saved in the album herein is a photo processed by the mobile phone. For example, different exposure processing is performed on a plurality of captured frames of the moon photo, to obtain a photo with the clear moon and a photo with a clear background. In addition, fusion is performed on the photo with the clear moon and the photo with a clear background to obtain a photo with the clear moon and a clear background. All the foregoing processing processes are completed inside the mobile phone, until a final moon photo is obtained and saved in the album.

Optionally, the foregoing processing process requires specific duration. For example, the foregoing processing process may take 2 seconds. After the user taps the shooting control 305, when the user taps the shooting control 305 for shooting, the mobile phone may first save a moon photo that has not been processed. After completing the processing in 2 seconds, the mobile phone automatically replaces the previously saved original moon photo with a processed photo with the clear and bright moon, and finally saves the processed photo with the clear and bright moon in the album.

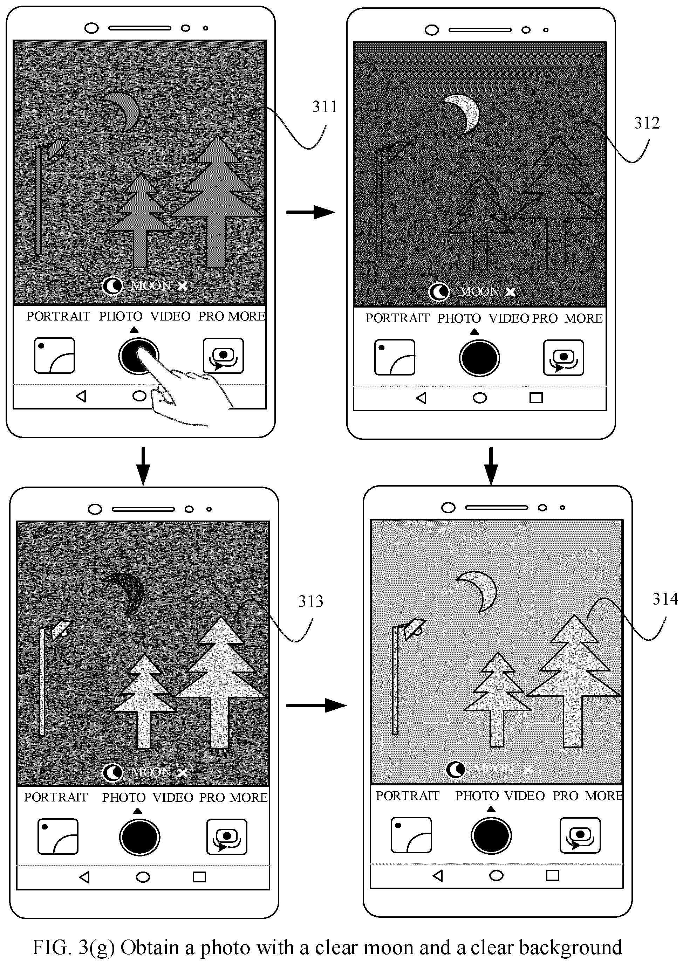

FIG. 3(g) is a schematic diagram of obtaining a photo with the clear moon and a clear background. In the moon mode, the moon in the image 311 in the shooting preview interface obtained after automatic focus is clear-cut. When the user taps the shooting control, in response to a shooting operation of the user, the electronic device separately obtains an image of a low exposure frame and an image of a high exposure frame. As shown in FIG. 3(g), the electronic device obtains a low exposure frame 312, and in the low exposure frame 312, the moon is bright and clear. The electronic device obtains a high exposure frame 313, and in the high exposure frame 313, a background is bright and clear. A photo 314 is obtained through fusion performed on the low exposure frame 312 and the high exposure frame 313. It can be seen from the photo 314 that both the moon and a background are bright and clear.

It should be understood that the low exposure frame 312 shown in the figure is a clear image obtained through fusion performed on two images of low exposure frames, and the high exposure frame 313 is also a clear image obtained through fusion performed on a plurality of images of high exposure frames with different exposure parameters. The photo 314 is a finally obtained moon photo, and the fused moon photo is saved in a local album. The photo 314 includes both the clear-cut and bright moon and a clear and bright background. The photo 314 is automatically saved in the album after being obtained. In a time period for obtaining the photo 314, the electronic device may first save any frame of the obtain photo. After the processing process ends, the photo 314 automatically replaces the photo temporarily saved in the album.

According to the moon shooting method described above, in a scene with the moon, the mobile phone may automatically identify the moon, enter the moon mode, and perform automatic focus on a main body of the moon. First, a captured moon image is optimized during focusing, and an exposure parameter is automatically adjusted to obtain a high-resolution moon photo. Then, a plurality of obtained frames of the high-resolution moon photo are differently processed according to an AI algorithm, to finally obtain a photo with the clear, bright, and beautiful moon. According to the foregoing method, in a moon shooting process, the user can shoot a photo with the clear-cut and bright moon in the standard mode, to improve shooting experience of the user.

The foregoing describes, with reference to FIG. 3(a) to FIG. 3(g), a man-machine interaction embodiment in the moon shooting process according to an embodiment of this application. To better understand the moon shooting method provided in this application, the following describes a specific implementation process and an algorithm from an implementation perspective.

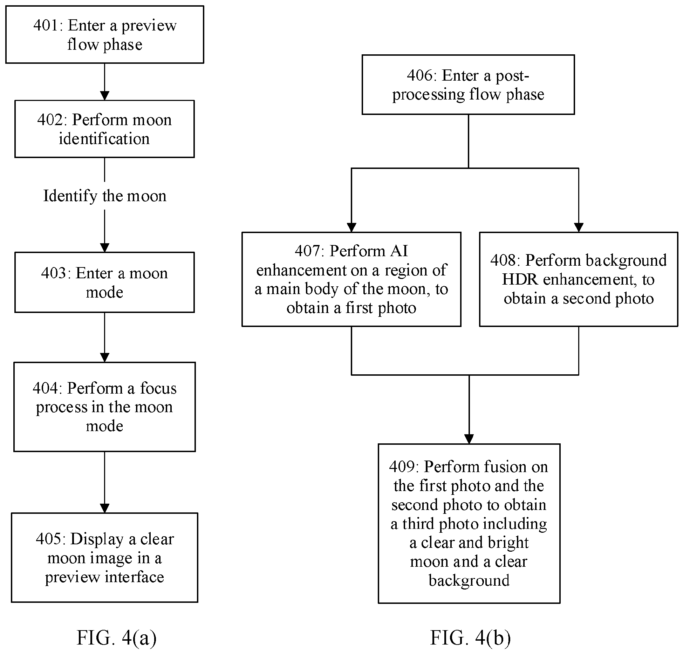

FIG. 4(a) and FIG. 4(b) are a schematic diagram of an example of a moon shooting process according to an embodiment of this application. In a specific implementation process, a moon shooting process may include a preview flow phase and a post-processing flow phase, and the two phases each correspond to a different processing process.

### Phase 1: Preview flow phase

It should be understood that the preview flow phase may correspond to a phase before a user taps the shooting control 305 to shoot a moon photo. For example, the preview flow phase may correspond to FIG. 3(b) to FIG. 3(d). After entering a camera mode, a mobile phone determines, based on an image captured by a camera, whether to enter a moon mode. After entering the moon mode, the mobile phone performs focus on a moon image captured in real time. Specifically, as shown in FIG. 4(a), the preview flow phase may include the following steps:
401: Enter the preview flow phase.
402: Identify the moon.

Subject identification means identification of a type and a location of an object in an image. That is, a type and a coordinate box of the object are identified in an output interface. Similarly, in this application, moon identification is to identify the moon in a preview interface of the camera, determine that the moon appears in the preview interface, and determine a coordinate location of the moon. The mobile phone may identify the moon according to a preset algorithm. A moon identification algorithm is not limited in this application.

Optionally, as described in FIG. 3(a) to FIG. 3(g), whether to enter the moon mode may be determined depending on whether the mobile phone identifies the moon and duration for which the moon appears in the preview interface. This can reduce a misjudgment rate and impact caused by an operation such as moving of the mobile phone by the user. Details are not described herein again.

403: After identifying the moon, an electronic device enters the moon mode.

After the mobile phone enters the moon mode for shooting, the preview interface of the mobile phone may be shown in FIG. 3(c) or FIG. 3(d). The mobile phone may explicitly prompt the user that the electronic device is currently in the moon mode. For display of specific preview interfaces, refer to FIG. 3(a) to FIG. 3(g) and related descriptions of FIG. 3(a) to FIG. 3(g). Details are not described herein again.

404: Perform a focus process in the moon mode.

The focus process is to perform ranging on a shooting subject, to adjust a lens in a camera to form a focus, so that an image of the shooting subject in a shooting preview interface looks clearer. In this application, an automatic focus (automatic focus, AF) technology is used for adjustment, to decrease exposure and focus on the moon.

Optionally, a focus frame may be displayed in the preview interface. For example, the focus frame is displayed on the identified moon. The focus frame is used to identify a main body of the moon and a general outline of the moon.

In a possible implementation, this application provides a special focus frame that adapts to the moon. The focus frame may vary with a size of the moon, and is not of a fixed size. The focus frame can meet shooting requirements in different shooting scenes, to meet a shooting requirement of the user.

When the mobile phone identifies the moon in the preview interface, that is, when an icon of the moon appears in the UI interface, the mobile phone performs automatical focus on the main body of the moon. In this focus process, the image of the moon can be optimized. In a focus process of the moon in a standard mode, the mobile phone cannot identify that the shooting subject is the long-distance moon, and focusing is relatively far. In addition, due to impact of a light source, the focus process may be from infinite-focus search to micro-focus search.

In this application, the mobile phone may identify that the shooting subject is the long-distance moon. After entering the focus process in the moon mode, the mobile phone may limit a search range of a focal length in the focus process based on a shooting distance of the moon. For example, the focus process in the moon mode limits a nearest search distance, and starts from infinite-focus search, but does not perform micro-focus search. For example, after the mobile phone enters the focus process in the moon mode, a focal length search range is limited to 50 meters to 100 meters, and no search is performed in a range within 50 meters. According to the method, fast automatic focus can be implemented, shooting experience of the user can be improved, and power consumption of the mobile phone can be reduced.

After the focus process, a clear moon image canbe obtained. In a possible implementation, in the preview flow phase, exposure parameters may be further automatically adjusted to obtain moon images with different brightness.

The exposure parameters may include an exposure time and an ISO value. The mobile phone may automatically adjust the exposure parameters, so that average brightness of a moon region in the preview interface reaches a preset value. For example, an image grayscale value of the moon region is preset to 50 to 60 (raw). The exposure parameters are automatically adjusted, so that the image grayscale value of the moon region in the preview interface of the mobile phone reaches 50 to 60.

In addition to the foregoing listed exposure parameters, there may be further any one of the following parameters in this application. Table 1 shows shooting-related parameters and functions of the parameters.

**Table 1 Shooting parameters and functions**

| Parameter | Function |
|---|---|
| ISO (ISO) | Set the ISO of the camera. A higher ISO value indicates a shorter time required for exposure and more image noise. |
| Shutter speed (S) | Set an exposure time. A device needs to keep static before the exposure time ends. Otherwise, the image is blurry. |
| Exposure value (EV) | This is used to change a recommended exposure value to make a photo brighter or darker. |
| Focus mode (AF) | Automatic focus-single (AF-S), automatic focus-continuous (AF-C), and manual focus (MF) are supported. In the automatic focus-continuous, the camera performs automatic focus again when a viewfinder changes greatly. |
| Automatic white balance (AWB) | This ensures that an imaging color is not affected by a color of a light source. A corresponding automatic white balance may be selected based on a type of the light source or an automatic white balance may be customized. |

It should be understood that, in the foregoing parameters, the exposure compensation is an exposure control manner, and is generally about ±2EV to 3EV If ambient light is dark, an exposure value may be increased (for example, increased to +1EV or +2EV) to improve an image resolution. The exposure compensation is a shooting method in which appropriate exposure parameters of the camera obtained through automatic calculation are consciously changed to make a photo brighter or darker.

Specifically, an exposure parameter adjustment value is dynamically calculated according to an automatic exposure (automatic exposure, AE) algorithm, and the AE algorithm is a technology of automatically adjusting image exposure. After dynamical adjustment according to the AE algorithm, a final display effect of the moon image in the preview interface can be close to that in a pro mode in which exposure parameters are manually set to iso 100 and an exposure time 1/100 ms.

After the exposure parameters are adjusted, brightness of the preview interface can be adjusted from bright to dark.

405: Display a clear moon image in the preview interface.

After the preview flow phase, after the mobile phone enters the moon mode for shooting, automatic focus can be implemented, and the user does not need to select. In addition, in the preview flow phase, the focus process in the moon mode is optimized for the moon. For example, the mobile phone may automatically adjust the exposure parameters based on current ambient light and different backgrounds in a shooting interface, so that an image with the clear-cut moon can be displayed in the preview interface.

### Phase 2: Post-processing flow phase

After related processing in the preview flow phase of the phase 1, the image with the clear-cut moon is displayed in the preview interface, and the user may take a photo. After the user taps the shooting control, the mobile phone enters the post-processing flow phase, and the mobile phone may automatically process the obtained photo, and finally provide a photo with the clear, bright, and beautiful moon for the user. As shown in FIG. 4(b), the post-processing flow phase may include the following content.

406: Enter the post-processing flow phase.

407: Perform AI enhancement on a region of the main body of the moon, to obtain a first photo including the clear and bright moon.

It should be understood that after the user taps the shooting control, the mobile phone may capture a plurality of frames of images.

An artificial intelligence (artificial intelligence, AI) super-resolution technology can generate a clear and bright image through dynamical adjustment based on a shooting scene. In this application, details and resolution of the moon may be enhanced by using an AI technology, to obtain an image including the ultra-clear moon.

408: Perform background HDR enhancement to obtain a second photo including a clear background.

409: Perform fusion on the first photo and the second photo to obtain a third photo including the clear and bright moon and a clear background.

High dynamic range (high dynamic range, HDR) imaging is a technology that can implement fusion of a plurality of frames with different exposure values, to output an image with a greater dynamic range. Compared with a common image, an HDR image can provide a greater dynamic range and more image details. According to low dynamic range (low dynamic range, LDR) images with different exposure times, LDR images with best details corresponding to the exposure times are fused into a final HDR image, and a visual effect in the real environment can be better reflected.

For example, HDR is used as an example. During HDR processing, the mobile phone may select a current image and two frames of images before and after the current image to perform HDR processing. For example, if the current image is the third frame of image, the mobile phone may select the second frame of image, the fourth frame of image, and the fifth frame of image to perform HDR fusion, and select a background target from a finally fused HDR image.

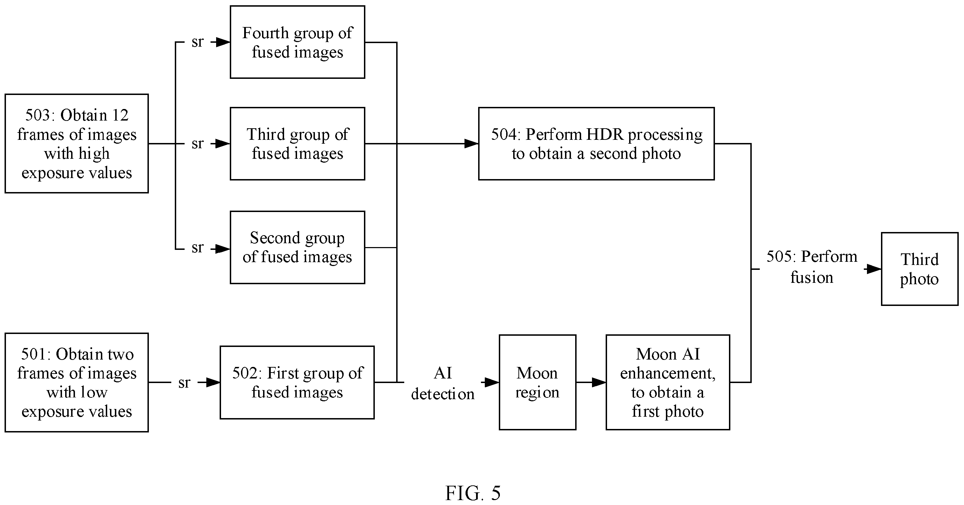

In a specific process, when the user taps the shooting control, the mobile phone starts to collect a plurality of frames of images. FIG. 5 is a schematic diagram of an example of a processing process of a processing flow phase according to an embodiment of this application. Details are as follows:
501: Obtain a first group of images, where the first group of images includes two frames of images with low exposure values. An image with a low exposure value is an image obtained after an exposure time is automatically adjusted based on brightness metering of the moon. For example, when the exposure time ranges from 1/50 ms to 1/16 ms, the first frame of image and the second frame of image are obtained.
502: Perform a multi-frame magnification (super resolution, sr) algorithm on the first group of images with low exposure values (the first frame of image and the second frame of image) to fuse the first group of images into one frame of high-resolution image. In this high-resolution image, a location of the moon is obtained according to an AI algorithm, and AI detail enhancement is performed on the moon, to obtain an image including the clear and bright moon. The image is denoted as a first image. SR processing is a technology of fusing a plurality of frames with a same exposure value into a clear image.

It should be understood that the first image may be understood as the first photo described in 407, and the first photo includes an image with the ultra-clear moon.

503: Capture a plurality of frames of images with high exposure values.

For example, 12 frames of images with high exposure values may be captured, and are denoted as the third frame to the fourteenth frame of images with high exposure values. The 12 frames of images with high exposure values are divided into three groups, and four frames of images in each group have a same exposure parameter. The second group of four frames of images (the third frame to the sixth frame) has two more exposure values (exposure value, ev) than the two frames with low exposure values in the first group. The third group of four frames of images (the seventh frame to the tenth frame) has two more evs than the first group. The fourth group of four frames of images (the eleventh frame to the fourteenth frame) has two more evs than the second group.

Exposure parameters of groups of exposure images that are actually captured at a time are used as examples, and four groups of exposure parameters are listed as follows: Parameters of the first group of two frames of images with low exposure values are ISO 250 and an exposure time expo 1/33s. Parameters of the second group of four frames of images with high exposure values are ISO 397 and an exposure time expo 1/25s. Parameters of the third group of four frames of images with high exposure values are ISO 606 and an exposure time expo 1/20s. Parameters of the second group of four frames of high exposure values are ISO 1010 and an exposure time expo 1/16s.

A multi-frame magnification algorithm is performed on the second group of four frames of images to generate a second high-exposure high-resolution image, a multi-frame magnification algorithm is separately performed on the third group of four frames of images to generate a third high-exposure high-resolution image, and a multi-frame magnification algorithm is separately performed on the fourth group of four frames of images to generate a fourth high-exposure high-resolution image.

504: Perform HDR multi-frame fusion on the three high-exposure high-resolution images (the second image, the third image, and the fourth image) to obtain a high-resolution background image. The obtained high-resolution background image may be understood as the second photo described in 408, and the second photo includes a clear background image.

505: Finally, fusion is performed on the moon image (the first photo) and the background image (the second photo) to obtain a photo with the clear moon and a clear background.

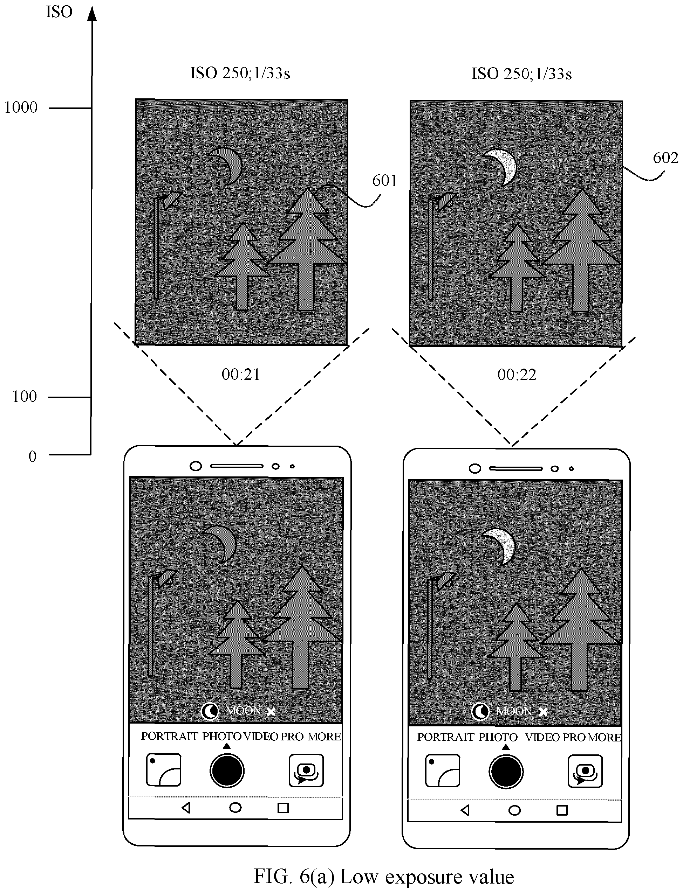

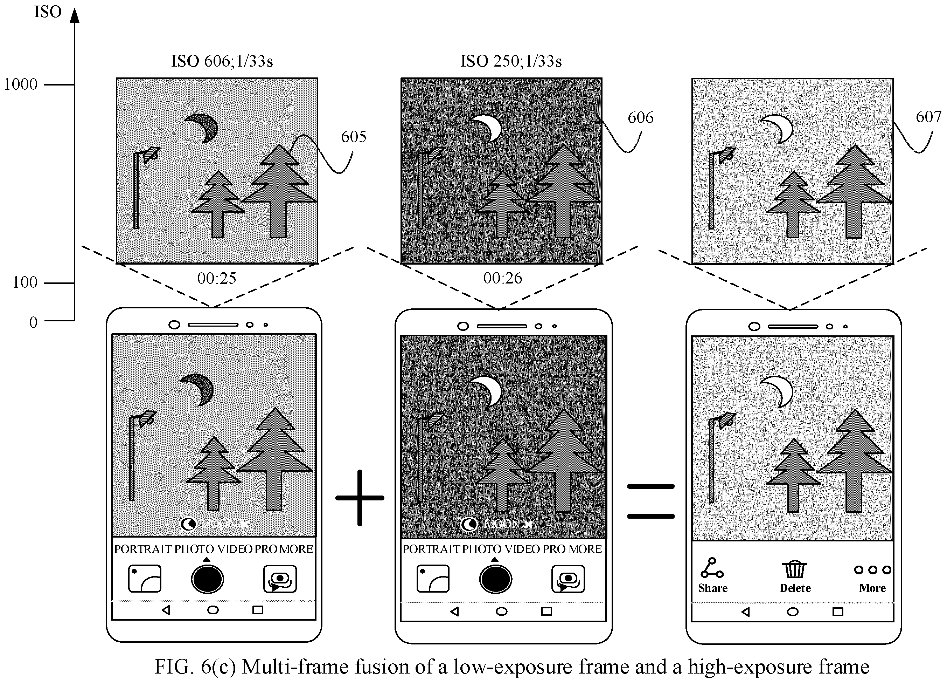

With reference to the image processing processes described in FIG. 4(a), FIG. 4(b), and FIG. 5, FIG. 6(a) to FIG. 6(c) are diagrams of effects of an image processing process according to an embodiment of this application. FIG. 6(a) corresponds to 502 in FIG. 5. The electronic device captures two frames of images with low exposure values, and fuses the two frames of images with low exposure values into a clear image. For example, the electronic device captures two frames of images with low exposure values shown in 601 and 602, performs processing according to the SR magnification algorithm, and fuses the two frames of images into a first photo 606 in FIG. 6(c) with the clearer moon and a darker tall building in the background than those an image shown in 604. AI detail enhancement is then performed on the moon in the first photo, to reduce some noise in the moon image.

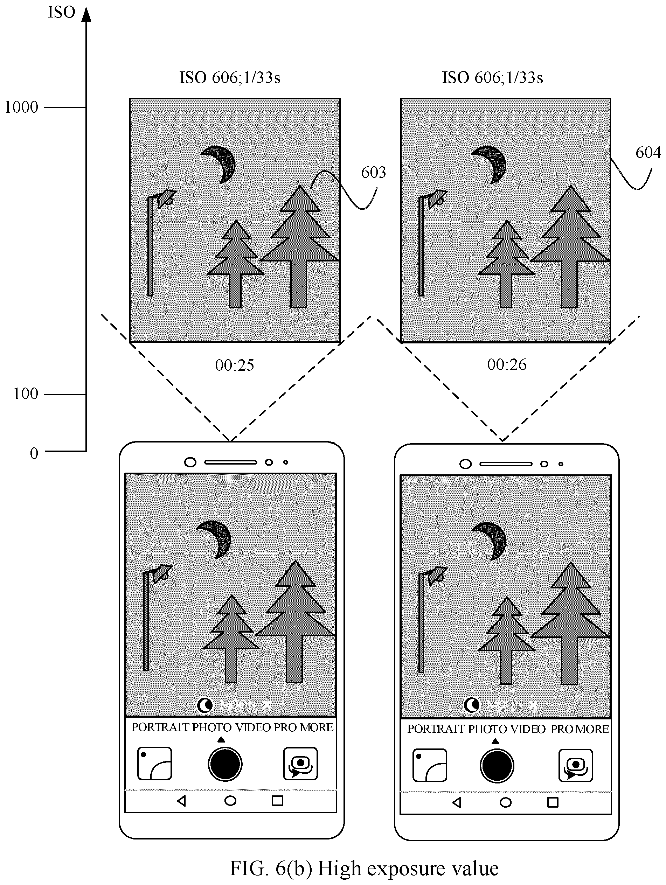

Further, as shown in FIG. 6(b), corresponding to 503 in FIG. 5, the electronic device may obtain a plurality of frames of images with high exposure values and process the plurality of frames of images with high exposure values to obtain a second photo 605 with a clear background. For example, the electronic device may obtain 12 frames of images with high exposure values, divide the images into three groups, and process four frames of images in each group, where the four frames of images in each group have a same exposure parameter. The four frames of images in each group are processed according to the SR magnification algorithm, to fuse the four frames of images into a second image with a clear background. FIG. 6(b) shows only two frames. The electronic device captures images 603 and 604 with high exposure frames, and fuses the images 603 and 604 into the second image through processing according to the SR magnification algorithm. The four frames of images in the third group and the four frames of images in the fourth group are processed by using the same processing procedure, to obtain a third image and a fourth image respectively. Brightness of the second image, the third image, and the fourth image is different. HDR fusion is performed on the second image, the third image, and the fourth image, to obtain the second photo 605 with a clear background.

As shown in FIG. 6(c), after the first photo 606 with the clear moon and the second photo 605 with a clear tall building in the background are obtained, the second photo 605 and the first photo 606 are fused to obtain a third photo 607. The third photo 607 is a finally obtained moon photo, and the fused moon photo is saved in a local album. The photo 607 includes both the clear-cut and bright moon and a clear and bright tall building in the background. The photo 607 is automatically saved in the album after being obtained. In a time period for obtaining the photo 607, the electronic device may first save any frame of the obtain photo. After the processing process ends, the photo 607 automatically replaces the photo temporarily saved in the album.

In conclusion, according to the moon shooting method provided in this application, the mobile phone automatically identifies the moon in the preview interface, and enters the moon mode after identifying the moon, to implement automatic focus on the moon, and display an image with the clear-cut moon in the preview interface. Then, according to the shooting operation of the user, a plurality of frames of images of the clear-cut moon with different exposure parameters are captured, and the plurality of frames of captured images are processed differently, to obtain the photo including a clear background image and the photo including the clear and bright moon. Fusion is performed on the photo with a clear background image and the photo with the clear and bright moon, to obtain the photo with the clear moon and a clear background. When the user shoots the moon, the method may implement an automatic processing technology in the shooting preview interface to identify the moon, implement automatic focus to obtain a clear moon image, and separately perform enhancement on the moon and the background during shooting, to shoot a photo with the clear-cut, bright, and beautiful moon. In this way, the photo with the clear-cut, bright, and beautiful moon is shot during shooting in a standard shooting mode or in a shooting process of a non-professional user. This improves shooting experience of the user.

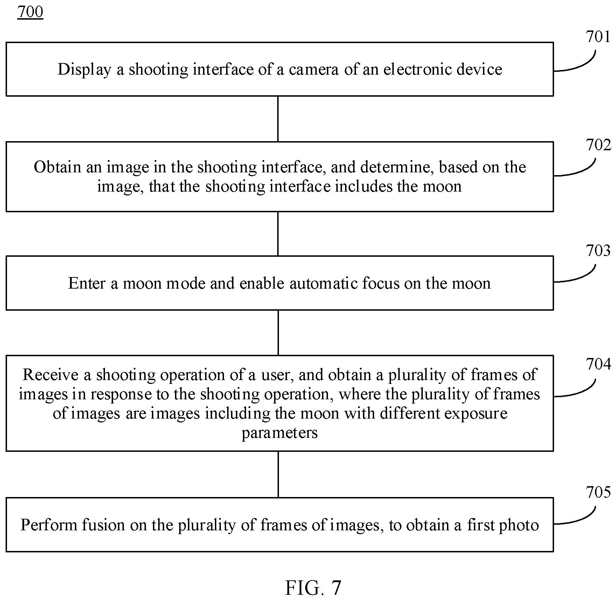

With reference to the foregoing embodiments and related accompanying drawings, the embodiments of this application provide a moon shooting method. The method may be implemented by an electronic device (for example, a mobile phone or a tablet computer) having a camera in FIG. 1 and FIG. 2. FIG. 7 is a schematic flowchart of a moon shooting method according to an embodiment of this application. As shown in FIG. 7, the method may include the following steps.

701: Display a shooting interface of a camera of the electronic device.

For example, the electronic device may display a camera preview interface shown in FIG. 3(b).

702: Obtain an image in the shooting interface, and determine, based on the image, that the shooting interface includes the moon.

For example, the electronic device may identify, by detecting an object that appears in the camera preview interface, that the preview interface includes the moon.

Specifically, the electronic device needs to accurately identify that the preview interface includes the moon. First, the electronic device may store a feature of the moon, and obtain a feature of a first object in the preview interface, where the feature of the first object is used to determine a category of the first object; and determine, based on the feature of the first object and the stored feature of the moon, that the first object is the moon.

For example, when a degree of matching between the feature of the first object and the feature of the moon is greater than or equal to a first threshold, the electronic device determines that the first object is the moon. That is, the electronic device enters a moon mode when the preview interface includes the moon.

703: Enter the moon mode and enable automatic focus on the moon.

For example, when identifying that the preview interface includes the moon, the electronic device immediately enters the moon mode, and the electronic device may display a preview interface shown in FIG. 3(c). In the moon mode, the preview interface may include a prompt box. The prompt box is used to prompt the user that a current shooting mode is the moon mode. For example, the prompt box may include a moon icon, text content of the moon mode, and a close control.

Optionally, the entering the moon mode further includes: automatically adjusting an exposure parameter, so that display brightness of the moon in the shooting interface reaches a preset value.

704: Receive a shooting operation of a user, and obtain a plurality of frames of images in response to the shooting operation, where the plurality of frames of images are images including the moon with different exposure parameters.

When the user taps a shooting control, the electronic device collects a plurality of frames of images.

Optionally, the plurality of frames of images include images with different exposure parameters. For example, the plurality of frames of images may include a first group of images with a first exposure parameter and a second group of images with a second exposure parameter.

705: Perform fusion on the plurality of frames of images, to obtain a first photo.

Optionally, the electronic device processes the first group of images with the first exposure parameter in the second processing mode to obtain a second photo, processes the second group of images with the second exposure parameter in the second processing mode to obtain a third photo, and performs fusion on the second photo and the third photo to obtain the first photo.

For example, the second processing mode may correspond to the image processing process described in FIG. 5, so that the plurality of frames of images captured by the electronic device are processed, to obtain a photo with the clear and bright moon and a clear and bright tall building nightscape in the background.

Optionally, the fusion performed by the electronic device on the plurality of frames of images further includes artificial intelligence AI detail enhancement, where the AI detail enhancement is used to enhance a fine detail resolution of the moon.

It may be understood that, to implement the foregoing functions, the electronic device includes corresponding hardware and/or software modules for performing the functions. With reference to algorithm steps of each example described in the embodiments disclosed in this specification, this application may be implemented in a form of hardware or a combination of hardware and computer software. Whether a function is performed by hardware or hardware driven by computer software depends on a particular application and a design constraint of the technical solutions. A person skilled in the art may use different methods to implement the described functions for each particular application with reference to the embodiments, but it should not be considered that the implementation goes beyond the scope of this application.

In the embodiments, the electronic device may be divided into function modules based on the example in the foregoing method. For example, each function module corresponding to each function may be obtained through division, or two or more functions may be integrated into one processing module. The integrated module may be implemented in a form of hardware. It should be noted that, in the embodiments, division into the modules is an example, and is merely a logical function division. In an actual implementation, another division manner may be used.

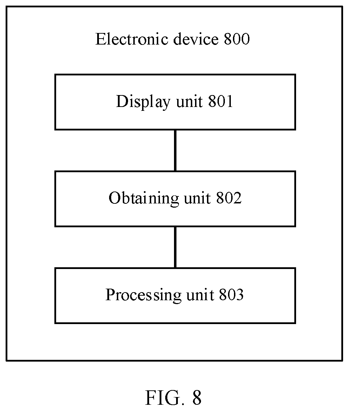

When each function module is obtained through division based on each corresponding function, FIG. 8 is a possible schematic diagram of composition of the electronic device 800 in the foregoing embodiment. As shown in FIG. 8, the electronic device 800 may include a display unit 801, an obtaining unit 802, and a processing unit 803.

The display unit 801 may be configured to support the electronic device 800 in performing step 701 and/or another process of the technology described in this specification.

The obtaining unit 802 may be configured to support the electronic device 800 in performing step 704, step 705, and/or another process of the technology described in this specification.

The processing unit 803 may be configured to support the electronic device 800 in performing step 702, step 703, step 706, and/or another process of the technology described in this specification.

It should be noted that all related content of the steps in the foregoing method embodiments may be cited in function descriptions of corresponding functional modules. Details are not described herein again.

The electronic device provided in this embodiment is configured to perform the moon shooting method. Therefore, an effect same as the effect of the foregoing implementation methods can be achieved.

When an integrated unit is used, the electronic device may include a processing module, a storage module, and a communications module. The processing module may be configured to control and manage actions of the electronic device, for example, may be configured to support the electronic device in performing the steps performed by the display unit 801, the obtaining unit 802, and the processing unit 803. The storage module may be configured to support the electronic device in storing program code, data, and the like. The communications module may be configured to support communication between the electronic device and another device.

The processing module may be a processor or a controller. The processor 802 may implement or execute various example logical blocks, modules, and circuits described with reference to content disclosed in this application. Alternatively, the processor may be a combination of processors implementing a computing function, for example, a combination of one or more microprocessors, or a combination of digital signal processing (digital signal processing, DSP) and a microprocessor. The storage module may be a memory. The communications module may be specifically a device that interacts with another electronic device, such as a radio frequency circuit, a Bluetooth chip, or a Wi-Fi chip.

In an embodiment, when the processing module is a processor and the storage module is a memory, the electronic device in this embodiment may be a device in the structure shown in FIG. 1.

The embodiments further provide a computer storage medium. The computer storage medium stores computer instructions. When the computer instructions are run on an electronic device, the electronic device is enabled to perform the related method steps, to implement the moon shooting method in the foregoing embodiments.

The embodiments further provide a computer program product. When the computer program product is run on a computer, the computer is enabled to perform the foregoing related steps, to implement the moon shooting method in the foregoing embodiments.

In addition, an embodiment of this application further provides an apparatus. The apparatus may be specifically a chip, a component, or a module. The apparatus may include a processor and a memory that are connected. The memory is configured to store computer executable instructions, and when the apparatus runs, the processor may execute the computer executable instructions stored in the memory, so that the chip performs the moon shooting method in the foregoing method embodiments.

The electronic device, the computer storage medium, the computer program product, or the chip provided in the embodiments is configured to perform the corresponding method provided above. Therefore, for beneficial effects that can be achieved, refer to the beneficial effects in the corresponding method provided above. Details are not described herein again.

The foregoing descriptions about implementations allow a person skilled in the art to understand that, for convenient and brief description, division into the foregoing function modules is taken as an example for illustration. In actual application, the foregoing functions can be allocated to different modules and implemented according to a requirement, in other words, an inner structure of an apparatus is divided into different function modules to implement all or some of the functions described above.

In the several embodiments provided in this application, it should be understood that the disclosed apparatus and method may be implemented in other manners. For example, the described apparatus embodiments are merely examples. For example, division into modules or units is merely logical function division and may be other division in an actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate parts may or may not be physically separate, and parts displayed as units may be one or more physical units, may be located in one place, or may be distributed in different places. Some or all of the units may be selected based on an actual requirement to achieve the objectives of the solutions of the embodiments.

In addition, function units in the embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software function unit and sold or used as an independent product, the integrated unit may be stored in a readable storage medium. Based on such an understanding, the technical solutions of this application essentially, or the part contributing to the current technology, or all or some of the technical solutions may be implemented in the form of a software product. The computer software product is stored in a storage medium and includes several instructions for instructing a device (which may be a single-chip microcomputer, a chip or the like) or a processor (processor) to perform all or some of the steps of the methods described in the embodiments of this application. The foregoing storage medium includes: any medium that can store program code, such as a USB flash drive, a removable hard disk, a read-only memory (read only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A moon shooting method, applied to an electronic device, wherein the method comprises:
displaying a shooting interface of a camera of the electronic device;
obtaining an image in the shooting interface, and determining, based on the image, that the shooting interface comprises the moon;
entering a moon mode and enabling automatic focus on the moon;
receiving a shooting operation of a user, and obtaining a plurality of frames of images in response to the shooting operation, wherein the plurality of frames of images are images comprising the moon with different exposure parameters; and
performing fusion on the plurality of frames of images, to obtain a first photo.

2. The method according to claim 1, wherein the entering a moon mode further comprises: automatically adjusting an exposure parameter, so that display brightness of the moon in the shooting interface reaches a preset value.

3. The method according to claim 1 or 2, wherein the plurality of frames of images comprise a first group of images with a first exposure parameter and a second group of images with a second exposure parameter, and the performing fusion on the plurality of frames of images to obtain a first photo comprises:
performing fusion on the first group of images with the first exposure parameter, to obtain a second photo comprising a clear moon image;
performing fusion on the second group of images with the second exposure parameter, to obtain a third photo comprising a clear background image; and
performing fusion on the second photo and the third photo, to obtain the first photo.

4. The method according to any one of claims 1 to 3, wherein the fusion on the plurality of frames of images further comprises artificial intelligence AI detail enhancement, wherein the AI detail enhancement is used to enhance a fine detail resolution of the moon.

5. The method according to any one of claims 1 to 4, wherein after the entering a moon mode, the method further comprises:
displaying a first control in the shooting interface, wherein the first control is used to indicate that the electronic device currently enters the moon mode.

6. The method according to claim 5, wherein the method further comprises:
receiving, in the shooting interface, an operation of closing the first control by the user, and exiting the moon mode in response to the operation.

7. The method according to any one of claims 1 to 6, wherein the electronic device stores a feature of the moon; and
the obtaining an image in the shooting interface, and determining, based on the image, that the shooting interface comprises the moon comprises:
obtaining a feature of a first object in the shooting interface, wherein the feature of the first object is used to determine a category of the first object; and
determining, based on the feature of the first object and the feature of the moon, that the first object is the moon.

8. The method according to claim 7, wherein the determining, based on the feature of the first object and the feature of the moon, that the first object is the moon comprises:
when a degree of matching between the feature of the first object and the feature of the moon is greater than or equal to a first threshold, determining that the first object is the moon.

9. An electronic device, comprising:
one or more processors;
one or more memories;
a plurality of applications; and
one or more programs, wherein the one or more programs are stored in the memory, and when the one or more programs are executed by the processor, the electronic device is enabled to perform the following steps:
displaying a shooting interface of a camera of the electronic device;
obtaining an image in the shooting interface, and determining, based on the image, that the shooting interface comprises the moon;
entering a moon mode and enabling automatic focus on the moon;
receiving a shooting operation of a user, and obtaining a plurality of frames of images in response to the shooting operation, wherein the plurality of frames of images are images comprising the moon with different exposure parameters; and
performing fusion on the plurality of frames of images, to obtain a first photo.

10. The electronic device according to claim 9, wherein the entering a moon mode further comprises:
automatically adjusting an exposure parameter, so that display brightness of the moon in the shooting interface reaches a preset value.

11. The electronic device according to claim 9 or 10, wherein the plurality of frames of images comprise a first group of images with a first exposure parameter and a second group of images with a second exposure parameter, and when the one or more programs are executed by the processor, the electronic device is enabled to perform the following steps:
performing fusion on the first group of images with the first exposure parameter, to obtain a second photo comprising a clear moon image;
performing fusion on the second group of images with the second exposure parameter, to obtain a third photo comprising a clear background image; and
performing fusion on the second photo and the third photo, to obtain the first photo.

12. The electronic device according to any one of claims 9 to 11, wherein the fusion on the plurality of frames of images further comprises artificial intelligence AI detail enhancement, wherein the AI detail enhancement is used to enhance a fine detail resolution of the moon.

13. The electronic device according to any one of claims 9 to 12, wherein when the one or more programs are executed by the processor, the electronic device is enabled to perform the following step:
displaying a first control in the shooting interface, wherein the first control is used to indicate that the electronic device currently enters the moon mode.

14. The electronic device according to claim 13, wherein when the one or more programs are executed by the processor, the electronic device is enabled to perform the following steps:
receiving, in the shooting interface, an operation of closing the first control by the user, and exiting the moon mode in response to the operation.

15. The electronic device according to any one of claims 9 to 14, wherein when the one or more programs are executed by the processor, the electronic device is enabled to perform the following steps:
storing a feature of the moon;
obtaining a feature of a first object in the shooting interface, wherein the feature of the first object is used to determine a category of the first object; and
determining, based on the feature of the first object and the feature of the moon, that the first object is the moon.

16. The electronic device according to claim 15, wherein when the one or more programs are executed by the processor, the electronic device is enabled to perform the following step:
when a degree of matching between the feature of the first object and the feature of the moon is greater than or equal to a first threshold, determining that the first object is the moon.

17. A computer storage medium, comprising computer instructions, wherein when the computer instructions are run on an electronic device, the electronic device is enabled to perform the moon shooting method according to any one of claims 1 to 8.

18. A computer program product, wherein when the computer program product is run on a computer, the computer is enabled to perform the moon shooting method according to any one of claims 1 to 8.
